Europäisches Patentamt

**European Patent Office**

Office européen des brevets

(11) Publication number: **0 113 144**
**B1**

(12) **EUROPEAN PATENT SPECIFICATION**

(45) Date of publication of patent specification: **26.10.88**

(21) Application number: **83201733.9**

(22) Date of filing: **07.12.83**

(51) Int. Cl.⁴: **A 01 D 87/12**

(54) **A bale pick-up claw apparatus.**

(30) Priority: **07.12.82 NL 8204742**

(43) Date of publication of application:
**11.07.84 Bulletin 84/28**

(45) Publication of the grant of the patent:
**26.10.88 Bulletin 88/43**

(84) Designated Contracting States:
**BE DE FR GB NL**

(56) References cited:
**BE-A- 717 157**
**GB-A-1 554 183**
**GB-A-1 603 621**
**US-A-2 734 646**
**US-A-3 876 093**

**LANDBOUWMECHANISATIE, vol. 32, no. 12,**
**December 1981, page 1155, Wageningen, NL**

(73) Proprietor: **van Die, Willem**
**Buitensingel 46**
**NL-9883 SH Oldehove (NL)**

(72) Inventor: **van Die, Willem**
**Buitensingel 46**
**NL-9883 SH Oldehove (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The invention relates to a transportable pick-up apparatus, comprising a carrier beam which is at right angles to the direction of transportation, and which carrier beam in a direction at right angles to the beam is connected to one or more hydraulically operated claw members, said claw members each comprising a combination of a curved claw member adapted for up- and down movement in the vertical plane as an upper claw portion and a coacting substantially straight and immovable claw member as a lower claw portion, said one or more claw members are hydraulically operable by a cylinder-and-piston assembly, said cylinder-and-piston assembly having pivotal fastening members to a carrier frame supported by the carrier beam and to the curved claw members respectively, which fastening members are positioned above the carrier frame.

Such an apparatus is known from Belgian Patent BE—A—717.157. The known apparatus is meant for transportiong fibrous loose material, for example beet leaves and hay, and consequently form and construction of the up-and-down movable curved claw member and the coacting immovable substantially straight claw member are such that they offer the possibility of separating a smaller amount of fibrous loose material from a larger heap of said material for transporting and depositing it elsewhere.

From British Patent GB—A—1.554.183 a bale handling apparatus is known which is connectable to a farm truck and by means of which baled material such as hay or straw may be handled, comprising a carrier beam. When coupling the bale handling apparatus to the truck said carrier frame is at right angles to the direction of travel of the vehicle. The carrier beam is connected· to hydraulically operated bale engaging members being connected to the carrier beam in parallel and laterally reciprocating relationship in a direction at right angles to the carrier beam. With the known bale handling apparatus to pick-up and to transport an amount of bales simultaneously, said bales are positioned in a row. For this purpose the bale engaging members are hydraulically moved outwardly to a mutual distance which is sufficient for the row of baled material to fit in between. The said bale engaging members are then moved towards each other, each to engage the corresponding side face of both the most exterior bales of the row of bales and still further moved so as to powerfully squeeze the bales in the row of bales against each other. The bales are raised together and as such may be transported and deposited elsewhere.

With respect to the known bale handling apparatus it thus is the squeezing power solely which keeps the bales together. If for one reason or another one of the bales is falling out of the squeezed row of bales, for example when the bales are not correctly positioned within the formed row, the whole row will tumble down which will not only stagnate the pace of work but which is also not out of danger.

Another reason for a bale to fall out of a row of squeezed bales may be due to the fact that bales are found in practice not to have the form of a regular rectangle but mostly have a concave top and a convex bottom.

It is an object of the invention to provide a transportable pick-up apparatus of a type as mentioned in the opening paragraph for the purpose of picking-up one or more bales at a time, said bales being made of products such as pre-dried grass, hay, lucerne and straw which may be pressed to large bales having dimensions of, for example, 1.60×1.20×0.17 m, in a manner making it practically impossible to have a bale tumbling down out of a row of squeezed bales.

Another objection of the invention is to provide a pick-up claw apparatus with which it is possible to load a waggon in such a manner that the loading width does not exceed the width permitted by the law and hence safe transport is automatically ensured and that, with a given loading capacity of the waggon the maximum cargon weight within the safety requirements set. After unloading the waggon, the packs should be stackable in such a manner that, while preserving the bearing surface, as regards each bale, the rounded form to the bales extends from the side face having the dimensions 1.60×1.20 m in the transverse direction of the eventual silage stack to be formed, while the contemplated pick-up claw apparatus should be capable of picking up packs of different widths, so that this can be used in a more universal manner.

According to the invention the above objects are achieved by providing a pick-up apparatus of the above described type wherein, in order to handle baled material, in particular baled roughage the claw members are connected in parallel and laterally reciprocating relationship to a carrier beam assembly which is at right angles to the direction of transportation, comprising one or more telescoping beam assemblies with the movable carrier beams each supporting a carrier frame;

the outer curvature of the curved claw members is at least partly an arc of a circle, the centre of which coincides with a shaft of rotation, pivotally coupling the curved claw member with the corresponding carrier frame;

the inner curvature of the curved claw member is at least partly an arc of a circle, the centre of which does not coincide with the said shaft of rotation;

the said shaft of rotation as are the said·pivotal fastening members of the cylinder-and-piston assembly, fitted to the corresponding carrier frame and the curved claw members respectively, is positioned above the carrier frame with a distance of the line of action of the cylinder-and-piston assembly through the pivotal fastening members, respectively to the shaft of rotation being greater in case of maximum lowered position of the curved claw members than in the maximum pulled-up position thereof while, when in the maximum pulled-up position the tip of the curved claw members ends above the underside of the carrier frame.

According to a preferred embodiment of the invention the carrier beam(s) comprises two pairs of telescoping, parallel beam assemblies and the apparatus comprises three pairs of claw members to be divided into two outer and one inner pair, each of the two outer pairs being fixedly connected to one pair of the corresponding telescoping beams associated with each of the two pairs of telescoping beam assemblies, the inner pair being connected to the fixed beams of the front pair of telescoping beam assemblies as seen in the direction of travel.

The possibility of changing the length of the carrier beam by forming it as a telescoping beam assembly, enables handling packs of variable widths. Thus, a pick-up claw apparatus according to the invention enables to pick up all at once up to 3 bales of the roughage, such as pre-dried grass etc., united to one pack with the sides of 1.60 m in co-extensive relationship, i.e., with a total pack length of 4.80 m. When loading a truck from the side with the pack for transport of the roughage to the silage location, this largest dimension of the pack of 4.80 m will conventionally be placed in longitudinal direction of the waggon, but in case the packs are stacked in two rows side by side on the truck, this will automatically lead to a load whose total width is 2×1.20 m=2.40 m. Such a load width complies with the statutory standard and a truck thus loaded can also be driven conveniently through the built-up area of a town or village.

The same pick-up claw apparatus according to the invention also allows to handle smaller packs, e.g. formed from only two bales or even a single bale, as will be explained in the following.

The measures taken according to the invention with respect to the form of the outer and inner curve of the curved claw member, the relative positioning of the curved claw members and the coacting cylinder-and-piston assemblies connected thereto and consequently the resulting line of action causes the pack to be picked up by the pick-up claw apparatus subjected to an upward and, seen in the direction of travel, rearward movement, with the upper claw portions biting into the top face of the respective bales. As a result of this feature, the claws do not project beyond the pack, so that the packs can also be placed against a wall or can even be put away in a corner, e.g. of a shed.

When the packs are unloaded in reverse order as compared with the loading of the truck and stacked at the silage location beginning from the ends of the silage stack being formed, the result is a silage stack 3×1.60=4.80 m wide, and, as regards each bale, the rounded form extends in the transverse direction of the silage stack. As a result, only the bales that, stacked onto each other, form the end faces of the silage stack, have the tendency to fall over outwardly. However, in connection with the appreciably smaller surface area of the end faces of the silage stack as compared with the vertical longitudinal side faces thereof, which may be as long as some tens of meters, only a small number of bales tend to fall over in longitudinal direction at the ends of the silage stack. One result of this is that the use of the pick-up claw apparatus according to the invention permits forming high silage stacks.

In practice, by using the pick-up claw apparatus according to the invention, effective silage stacks can be formed which comprise up to 4 layers of bales and the total height of which is therefore 4×0.70=2.80 m, thereby also achieving a higher efficiency of the ground surface available for the silage stack. Moreover, by stacking the bales of the top layer in off-set relationship to that of the subjacent layer, the falling-over of the stack at the ends of the silage stack is prevented as well.

One embodiment of the pick-up claw apparatus according to the invention will now be described, by way of example, with reference to the accompanying drawings, in which:

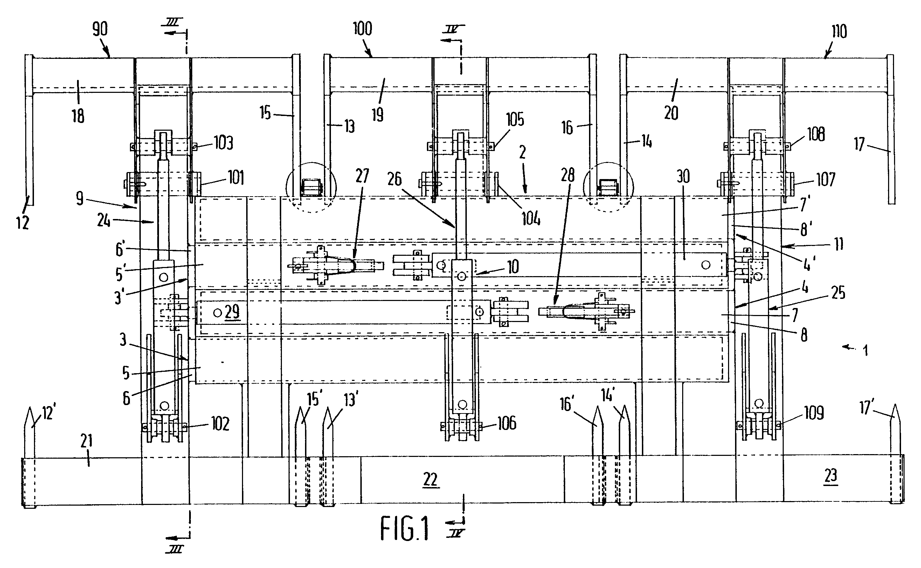

Fig. 1 is a top view of a three-pack pick-up claw apparatus according to the invention, the carrier beam of which is not telescoped outwardly;

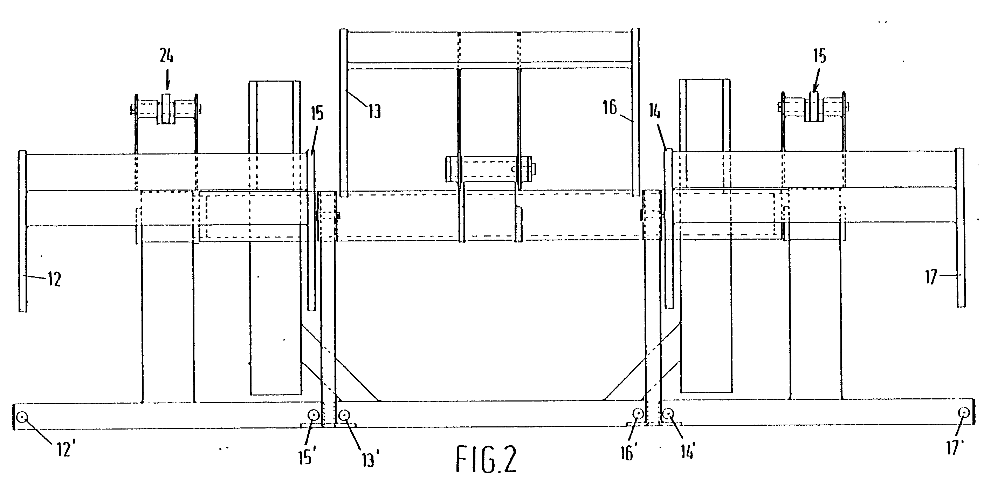

Fig. 2 is a front view of the three-pack claw apparatus;

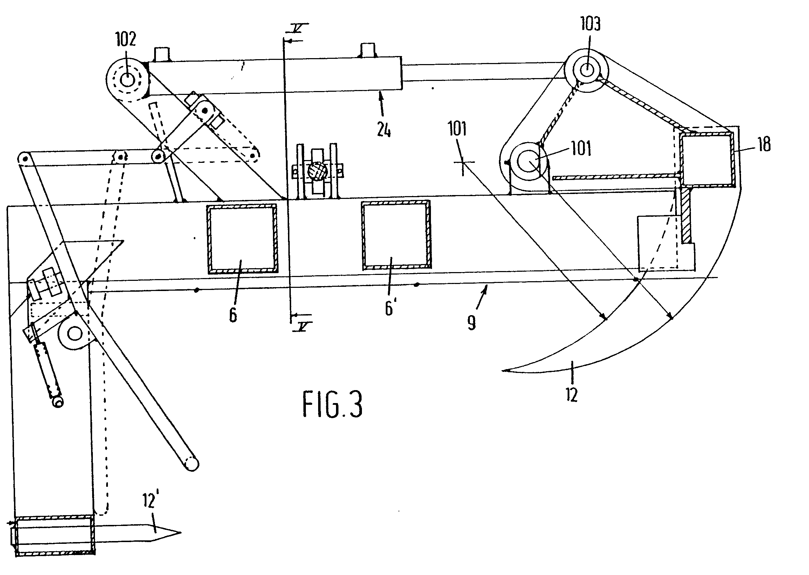

Fig. 3 is a cross-section on the line III—III of Fig. 1;

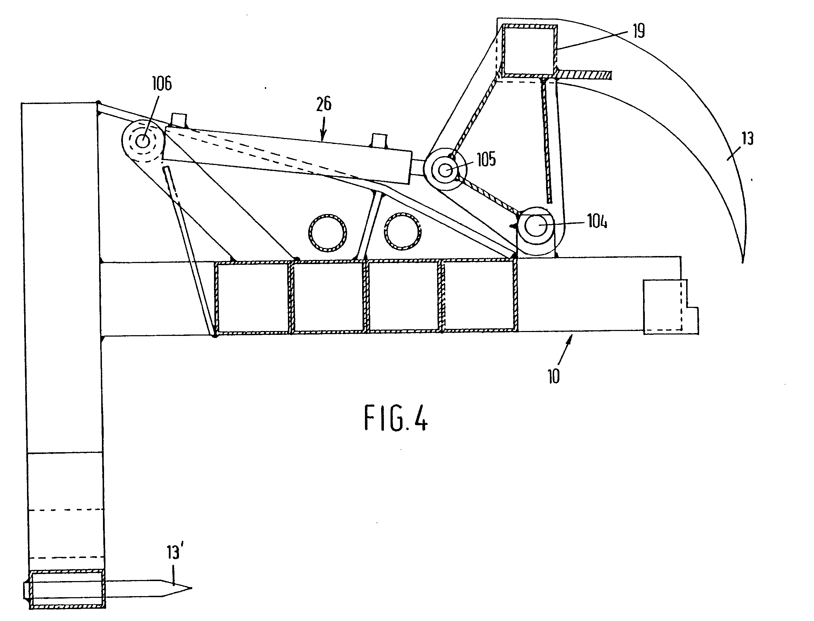

Fig. 4 is a cross-section on the line IV—IV of Fig. 1;

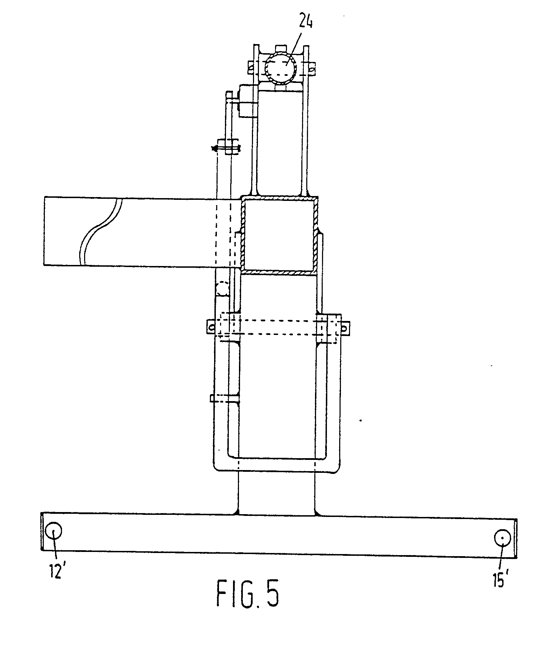

Fig. 5 is a cross-section on the line V—V of Fig. 3; and

Figs. 6—9 are diagrammatic top views of two gripping possibilities attainable with the three-pack claw apparatus, i.e. of a pack of 3 bales (Fig. 6 and Fig. 7), and of a pack of 2 bales, respectively (Fig. 8 and Fig. 9).

In the drawing, 1 indicates a three-pack pick-up claw apparatus with carrier beam assembly 2, being an assembly of two pairs of telescoping box beam assemblies 3, 3' and 4, 4'. The telescoping box beam assemblies, pertaining to the pair 3, 3', comprise outer beams 5, 5' and inner beams 6, 6', while the pair 4, 4' comprise outer beam 7, 7' and inner beams 8, 8'.

Connected to the carrier beam are three claw members 90, 100 and 110, each comprising upper claws (12, 15), (13, 16) and (14, 17) as well as lower claws (12', 15'), (13', 16') and (14', 17') respectively.

A carrier frame 9 is welded onto the ends of the outwardly and inwardly telescoping inner beams 6, 6' of the beam assemblies 3, 3', two frame beams 18 and 21 forming part of said carrier frame 9. The ends of the frame beam 18 are connected to upper claws 12 and 15 and the ends of the frame beam 21 to lower claws 12' and 15'.

The carrier frame 9 furthermore carries a hydrocylinder-and-piston assembly 24 pivotally attached at its one end to the carrier frame 9 by fastening means 102 and at its other end to the frame beam 18 by fastening means 103. The hydrocylinder-and-piston assembly 24 is disposed on the carrier frame 9 with its fastening means 102, 103 being positioned above the carrier frame in such a manner that the frame beam 18 can be rotated thereby about a shaft 101 and hence the upper claws 12, 15 can be moved up and down in the vertical plane, thereby coacting with the fixed, tooth-shaped lower claws 12', 15' for the purpose of gripping or disengaging the bale-shaped load. The position of the coacting upper and lower claws 12, 12' and 15, 15', with their attachment to the carrier frame 9, is chosen in such a manner that, when the bale-shaped load is gripped, a rearward and upward movement is imparted thereto, because the outer curvature of the upper claws 12, 15 is at least partly an arc of a circle with its centre 101a not coinciding with the shaft 101 of rotation.

Analogously to the suspension construction pertaining to the beam assemblies 3, 3', the outwardly and inwardly telescoping inner beams 8, 8' of the beam assemblies 4, 4' are affixed to carrier frame 11, comprising frame beams 20 and 23, to the ends of which there are attached the upper claws 14, 17, and lower claws 14', 17', respectively, coacting for the purpose of engaging and disengaging the bale-shaped load, said lower claws being again designed as fixed tooth-shaped elements.

The carrier frame 11 is further fitted with the hydrocylinder-and-piston assembly 25 pivotally attached at its one end to the carrier frame 11 by fastening means 109 and at its other end to the frame beam 20 by fastening means 108. The fastening means are positioned above the carrier frame so that the upper claws 14 and 17 are again synchronously movable up and down in the vertical plane about a shaft 107 by means of the hydrocylinder-and-piston assembly 25.

Between the carrier frames 9 and 11 movable outwardly and inwardly by means of the telescoping inner beams 6, 6', and 8, 8', respectively, there is provided a third carrier frame 10, which, however, is affixed to the outer beams 5, 5', 7, 7' and hence is immovable and stationary. For that matter, analogously to the movable carrier frames 9, 11, the fixed frame 10 is provided with frame beams 19, 22; upper claws 13, 16, movable in the vertical plane and fixed tooth-shaped lower claws 13', 16' as well as a hydrocylinder-and-piston assembly 26 pivotally affected at its one end to the carrier frame 10 by fastening means 106 and at its other end to the frame beam 19 by fastening means 105. The fastening means are positioned above the carrier frame so that the upper calws 13 and 16 are movable up and down about a shaft 104 by means of the hydrocylinder-and-piston assembly 26.

The telescoping beam assemblies 3, 3' coacting for the outward and inward movement of the carrier frame 9 with the upper claws 12, 15 and lower claws 12', 15' are provided with a blocking element 27, not further described, for limiting the telescoping movement of the inner beams. Similarly, the telescoping beam assemblies 4, 4' are provided with a blocking element 28.

The telescoping movement of the inner beams 6, 6', and 8, 8', respectively, takes place by means of the hydrocylinder-and-piston assembly 29, 30.

Naturally, the three-pack pick-up claw 1 is further fitted with coupling means, not further shown, by means of which it can be coupled e.g. to a wheel loader, and with connection means through which the hydraulic system of the three-pack pick-up claw 1 can be connected to the hydraulic system of the wheel loader.

The three-pack pick-up claw can be operated as follows.

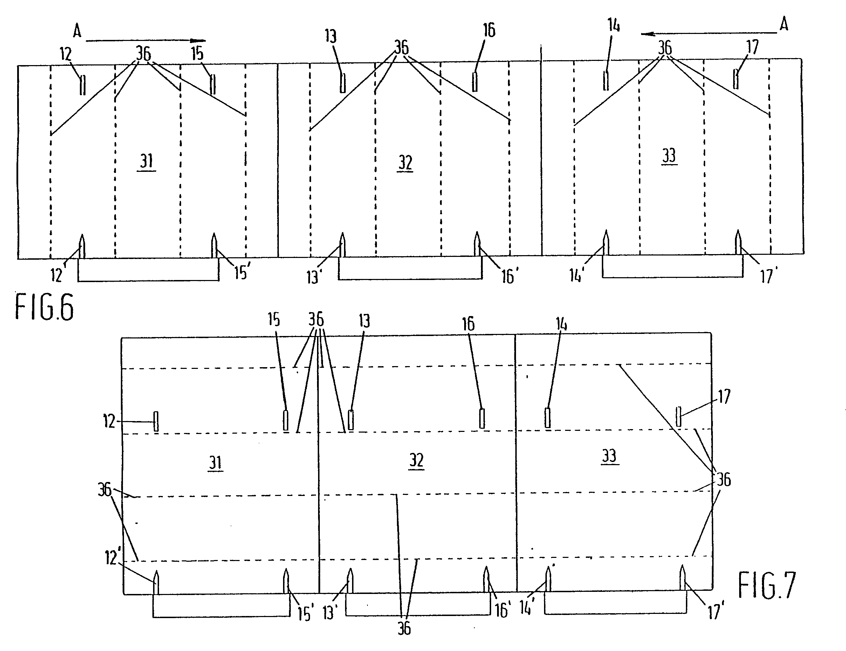

The bales of dimensions 1.60×1.20×0.70 m kept together by binding wires 36 and formed by means of a so-called large baling press during the gathering of e.g. predried silage grass are installed side by side in groups of three bales 31, 32, 33 (Fig. 6) and formed into one pack. The precise width of the carrier beam is adjusted by moving the inner beams 6, 6' and 8, 8' outwardly up to the maximally extended position. Subsequently, the pick-up claw apparatus is transported in the direction of the pack, the lower claws are inserted in the pack and the pack is further gripped by the downward movement of the upper claws and the penetration of said claws in the top face of the bales. By moving the inner beams 6, 6' and 8, 8' inwardly, the pack is compressed in the direction of the arrows A (Fig. 6), in which condition the pack can be conveniently lifted and transported to a truck.

The three bales can also be formed to a pack, as now conventional in the art in question, and as shown in Fig. 7. The inner beams 6, 6' and 8, 8' will then be moved outwardly a smaller distance, determined by adjustment of the blocking elements 27, 28.

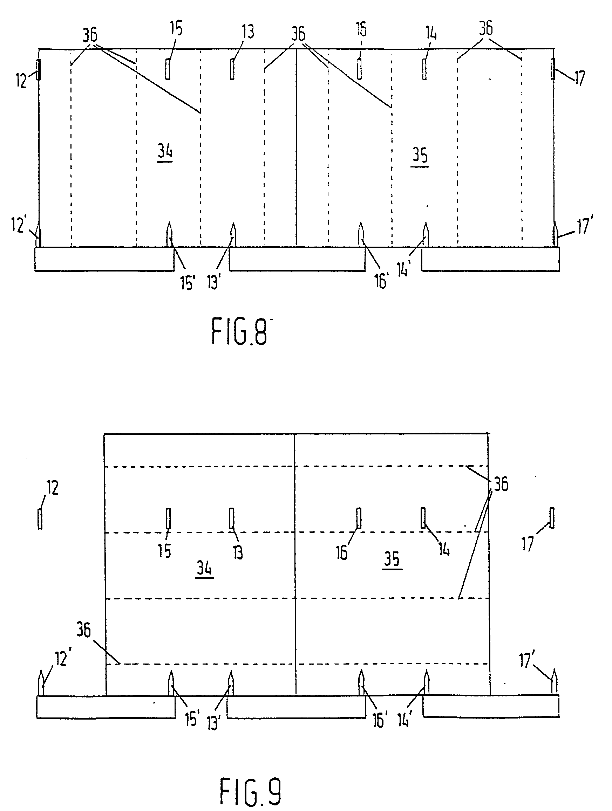

The three-pack pick-up claw apparatus, also permits handling packs that consist of two bales 34, 35, as shown in Figs. 8, 9.

**Claims**

1. A transportable pick-up apparatus, comprising a carrier beam which is at right angles to the direction of transportation, and which carrier beam in a direction at right angles to the beam is connected to one or more hydraulically operated claw members (90, 100, 110), said claw members each comprising a combination of a curved claw member (12, 15, 13, 16, 14, 17) adapted for up-and-down movement in the vertical plane as an upper claw portion and a coacting substantially straight and immovable claw member (12', 15', 13', 16', 14', 17') as a lower claw portion, said one or more claw members (90, 100, 110) are hydraulically operable by a cylinder-and-piston assembly (24, 26, 25), said cylinder-and-piston assembly having pivotal fastening members (102, 106, 109; 103, 105, 108) to a carrier frame (9, 10, 11) supported by the carrier beam and to the curved claw members (12, 15, 13, 16, 14, 17) respectively, which fastening members are positioned above the carrier frame, characterized in that in order to handle baled material, in particular baled roughage, the claw members are connected in parallel and laterally reciprocating relationship to a carrier beam assembly (2), which is at right angles to the direction of transportation, comprising one or more telescoping beam assemblies (3, 3' or 4, 4') with the movable carrier beams each supporting a carrier frame;

the outer curvature of the curved claw members (12, 15, 13, 16, 14, 17) is at least partly an arc of a circle, the centre of which coincides with a shaft of rotation (101, 104, 107), pivotally coupling the curved claw member (12, 15, 13, 16, 14, 17) with the corresponding carrier frame (9, 10, 11);

the inner curvature of the curved claw member (12, 15, 13, 16, 14, 17) is at least partly an arc of a circle, the centre (101a) of which does not coincide with the said shaft of rotation (101, 104, 107);

the said shaft of rotation (101, 104, 107), as are the said pivotal fastening members 102, 106, 109; 103, 105, 108) of the cylinder-and piston assembly (24, 26, 25) fitted to the corresponding carrier frame (9, 10, 11) and the curved claw members (12, 15, 13, 16, 14, 17) respectively, is positioned above the carrier frame (9, 10, 11) with a distance of the line of action of the cylinder-and-piston assembly (24, 26, 25) through the pivotal fastening members (102, 106, 109; 103, 105, 108), respectively to the shaft of rotation (101, 104, 107) being greater in case of maximum lowered position of the curved claw members than in the maximum pulled-up position thereof while, when in the maximum pulled-up position the tip of the curved claw members (12, 15, 13, 16, 14, 17) ends above the underside of the carrier frame (9, 10, 11).

2. An apparatus according to claim 1, characterized in that the carrier beam (2) comprises two pairs of telescoping, parallel beam assemblies (3, 3', 4, 4') and the apparatus comprises three pairs of claw members (90, 100, 110) to be divided into two outer (90, 110) and one inner pair (100), each of the two outer pairs (90, 110) being fixedly connected to one pair of the corresponding telescoping beams (6, 6'; 8, 8') associated with each of the two pairs of telescoping beam assemblies (3, 3'; 4, 4'), the inner pair (100) being connected to the fixed beams of the front pair of telescoping beam assemblies (5, 5'; 7, 7'), as seen in the direction of travel.

**Patentansprüche**

1. Transportable Großballenzange, die einen Trägerbalken beinhaltet, der sich im rechten Winkel zur Fahrtrichtung befindet und an dem wiederum im rechten Winkel ein oder mehrere hydraulisch betriebene Greifzangenglieder (90, 100, 110) montiert sind, wobei besagte Greifzangenglieder aus einer Kombination von je einem gebogenen Greifzangenteil (12, 15, 13, 16, 14, 17), das für die Auf- und Ab- Bewegung in der vertikalen Ebene und als oberes Greifzangenteil ausgelegt ist, und von je einem mit oben genanntem Teil zusammenarbeitenden, im wesentlichen geraden und unbeweglichen Greifzangenteil (12', 15', 13', 16', 14', 17') als unteres Greifzangenteil besteht; oben genannte ein oder mehrere Greifzangenglieder (90, 100, 110) werden von einer Zylinder- und Kolben-Vorrichtung (24, 26, 25) hydraulisch betrieben, wobei besagte Zylinder- und Kolben-Vorrichtung drehbare Befestigungselemente (102, 106, 109, 103, 105, 108) am Trägerrahmen (9, 10, 11), der vom Trägerbalken gestützt wird, besitzt, desgleichen an den gebogenen Greifzangenteilen (12, 15, 13, 16, 14, 17); diese Befestigungselemente (102, 106, 109, 103, 105, 108) sind oberhalb des Trägerrahmens angebracht, dadurch gekennzeichnet, daß, um mit in Ballen gepacktem Material, insbesondere Rauhfutter, zu hantieren, die Greifzangenteile so an der Trägerbalkenvorrichtung befestigt sind, daß sie sich in paralleler und seitwärtiger Richtung zum Trägerbalken hin- und herbewegen können, wobei die Trägerbalkenvorrichtung (2), die sich im rechten Winkel zur Fahrtrichtung befindet, ein oder mehrere ausziehbare und ineinanderschiebbare Balkenteile (3, 3' bzw. 4, 4') beinhaltet; dabei unterstützen die beweglichen Trägerbalken einen Trägerrahmen;

die äußere Krümmung der gebogenen Greifzangenteile (12, 15, 13, 16, 14, 17) ist zumindest teilweise ein Kreisbogen, dessen Mittelpunkt mit einer Drehachse (101, 104, 107) zusammenfällt, die das gebogene Greifzangenteil (12, 15, 13, 16, 14, 17) drehbar mit dem entsprechenden Trägerrahmen (9, 10, 11) verbindet;

die innere Krümmung der gebogenen Greifzangenteile (12, 15, 13, 16, 14, 17) ist zumindest teilweise ein Kreisbogen, dessen Mittelpunkt (101a) nicht mit besagter Drehachse (101, 104, 107) zusammenfällt;

Die erwähnten drehbaren Befestigungselemente (102, 106, 109, 103, 105, 108) der Zylinder- und Kolbenvorrichtung (24, 25, 26) sind an dem entsprechenden Trägerrahmen (9, 10, 11) und an die gebogenen Greifzangenteile (12, 15, 13, 16, 14, 17) bzw. an die Drehachse (101, 104, 107) montiert, wobei die Drehachse (101, 104, 107) oberhalb des Trägerrahmens (9, 10, 11) in einer Entfernung, die der Länge er Aktionslinie der Zylinder- und Kolbenvorrichtung, ausgehend von den drehbaren Befestigungselementen (102, 106, 109, 103, 105, 108), entspricht, angebracht ist, wobei diese Entfernung im Falle der niedrigsten Stellung der gebogenen Greifzangenteile größer ist als in der höchsten Stellung derselben; die Spitze der gebogenen Greifzangenteile (12, 15, 13, 16, 14, 17) endet in der höchsten Stellung oberhalb der Unterseite des Trägerrahmens (9, 10, 11).

2. Vorrichtung gemäß Anspruch 1, dadurch gekennzeichnet, daß der Trägerbalken (2) aus zwei Paaren verschiebbarer, paralleler Balkenvorrichtungen (3, 3', 4, 4') und drei Greifzangengliederpaaren (90, 100, 110) besteht, die in zwei äußere (90, 110) und ein inneres Paar (100) eingeteilt werden können, wobei jedes der zwei äußeren Paare fest an ein Paar entsprechender Teleskop-Balken (6, 6'; 8, 8') montiert ist, die wiederum mit jedem der zwei Paare verschiebbarer Balkenvorrichtungen (3, 3'; 4, 4') verbunden sind; dabei ist das innere Paar (100) mit den ortsfesten Balken des—in Fahrtrichtung gesehen—vorderen Paares der verschiebbaren Balkenvorrichtungen (5, 5'; 7, 7') verbunden.

## Revendications

1. Appareil de ramassage transportable, comprenant une flèche de support qui est à angle droit par rapport à la direction de transport, laquelle flèche de support dans une direction à angle droit par rapport à la flèche est reliée à un ou plusieurs organes de pince actionnés hydrauliquement (90, 100, 110), lesdits organes de pince comprenant chacun une combinaison d'un organe de pince incurvé (12, 15, 13, 16, 14, 17) adapté pour se déplacer vers le haut et vers le bas dans le plan vertical, formant une partie de pince supérieure, et un organe de pince immobile et sensiblement droit coopérant (12', 15', 13', 16', 14', 17'), formant une partie de pince inférieure, ledit ou lesdits organes de pince (90, 100, 110) pouvant être actionnés hydrauliquement par un ensemble cylindre-piston (24, 26, 25), ledit ensemble cylindre-piston présentant des organes de fixation pivotants (102, 106, 109; 103, 105, 108) à un châssis de support (9, 10, 11) supporté par la flèche de support et aux organes de pince incurvés (12, 15, 13, 16, 14, 17) respectivement, lesquels organes de fixation sont positionnés au-dessus du châssis de support, caractérisé en ce que, de façon à manipuler de la matière en balles, en particulier de la matière en balles comme du foin, les organes de pince sont reliés en parallèle et en relation de va-et-vient latéral à un ensemble de flèche de support (2), qui est à angle droit par rapport à la direction de transport, comprenant un ou plusieurs ensembles de flèches télescopiques (3, 3') ou (4, 4'), chaque flèche de support mobile supportant un châssis de support;
—la courbure externe des organes de pince incurvés (12, 15, 13, 16, 14, 17) est au moins partiellement un arc de cercle, dont le centre coïncide avec un arbre de rotation (101, 104, 107), couplant, de façon pivotante, l'organe de pince incurvé (12, 15, 13, 16, 14, 17) avec le châssis de support correspondant (9, 10, 11);
—la courbure interne des organes de pince incurvés (12, 15, 13, 16, 14, 17) est au moins partiellement un arc de cercle, dont le cntre (101a) ne coïncide avec ledit arbre de rotation (101, 104, 107);
—ledit arbre de rotation (101, 104, 107), comme le sont lesdits organes de fixation pivotants (102, 106, 109; 103, 105, 108) de l'ensemble cylindre-piston (24, 26, 25) adapté au châssis de support correspondant (9, 10, 11) et les organes de pince incurvés (12, 15, 13, 16, 14, 17), respectivement, est positionné au-dessus du châssis de support (9, 10, 11) à une distance de la ligne d'action de l'ensemble cylindre-piston (24, 26, 25) par l'intermédiaire des organes de fixation pivotants (102, 106, 109; 103, 105, 108), respectivement à l'arbre de rotation (101, 104, 107), qui est plus grande quand les organes de pince incurvés sont dans la position abaissée maximale que lorsque ceux-ci sont dans la position relevée au maximale, tandis que, dans la position relevée maximale, le bout des organes de pince incurvés (12, 15, 13, 16, 14, 17) se termine au-dessus du dessous du châssis de support (9, 10, 11).

2. Appareil selon la revendication 1, caractérisé en ce que la flèche de support (2) comprend deux paires d'ensembles de flèches parallèles télescopiques (3, 3'), (4, 4') et l'appareil comprend trois paires d'organes de pince (90, 100, 110) divisées en deux paires externes (90, 110) et une paire interne (100), chacune des deux paires externes (90, 110) étant reliée de façon fixe, à une paire des flèches télescopiques correspondantes (6, 6'; 8, 8') associée à chacune des deux paires d'ensembles de flèches télescopiques (3, 3'); (4, 4'), la paire interne (100) étant reliée aux flèches fixes de la paire frontale des ensembles de flèches télescopiques (5, 5'; 7, 7'), vue dans la direction de déplacement.

FIG.1

FIG.2

0 113 144

FIG.3

0 113 144

FIG.4

0 113 144

FIG. 5

FIG.6

FIG.7

0 113 144

FIG.8

FIG.9